# DEMANDE DE BREVET EUROPEEN

(11) **EP 4 851 313 A1**
(43) Date de publication de la demande: **09.12.2026**
(21) Numéro de dépôt: 26183135.8
(22) Date de dépôt: 04.06.2026
(51) Int. Cl.: C22B 1/00, B09B 3/35, C22B 1/16, C22B 5/12, C22B 23/02, C22B 59/00, H01M 8/008, C25B 13/07

(54) **PROCÉDÉ DE PRÉTRAITEMENT DES MATÉRIAUX MÉTALLIQUES COMPOSITES PERMETTANT LA CONCENTRATION ET LA SÉPARATION DES PHASES EN VUE DE SON RECYCLAGE**

(30) Priorité: 05.06.2025 FR 2506121
(71) Demandeur: Commissariat à l'Energie Atomique et aux Energies Alternatives, 75015 Paris (FR)
(72) Inventeur: PERRIN, Mathilde, 38054 GRENOBLE cedex 09 (FR); EL HAKIM, Sara, 38054 GRENOBLE cedex 09 (FR); BILLY, Emmanuel, 38054 GRENOBLE cedex 09 (FR)
(74) Mandataire: Santarelli

(57) **Abrégé**

L'invention concerne un procédé de prétraitement d'un matériau composite comportant au moins une phase métallique à recycler à l'état réduit, et au moins une phase oxyde ou céramique. Le procédé comprend une étape de broyage dite de libération jusqu'à une taille de particule prédéfinie permettant de libérer au moins partiellement la phase métallique, une étape d'agglomération mécanique de ladite phase métallique par broyage en présence d'un agent dispersant, puis une étape de séparation gravitaire dans un agent dispersant, conduisant à l'obtention d'une phase métallique concentrée sous forme de sédiment. Le procédé permet une séparation efficace des phases par des moyens exclusivement mécaniques et l'utilisation d'un seul réactif, recirculable. Il est applicable notamment au recyclage de piles à combustible à oxydes solides (SOFC), d'électrolyseurs haute température (SOEC), ou de déchets métalliques mélangés à des oxydes.

## Description

### Domaine Technique

La présente demande concerne le domaine de recyclage des matériaux composites comportant au moins un métal à recycler et une phase oxyde ou céramique. L'invention concerne notamment la séparation et concentration d'un métal à l'état réduit, ainsi que d'un oxyde lorsque présent, par des étapes de traitement physique.

En particulier, l'invention s'applique au recyclage des piles à combustible à électrolyte solide (SOFC) et des électrolyseurs haute température (SOEC) pour la séparation et la concentration de nickel et l'oxyde d'yttrium respectivement.

### État de la technique antérieure

On connait divers matériaux composites ou assemblages dans lesquels une ou plusieurs phases métalliques coexistent avec des oxydes ou des céramiques. On retrouve ce type de configuration dans de nombreux secteurs industriels, par exemple lors de la fabrication d'outils de coupe à base de carbures métalliques, dans des catalyseurs contenant des métaux actifs déposés sur un support inerte, ou encore dans certaines batteries où métaux et composés oxydés cohabitent en couches superposées ou en grains entremêlés. Dans tous ces cas de figure, la nécessité de valoriser les métaux précieux ou stratégiques et de réutiliser autant que possible la fraction oxyde entraîne un besoin croissant de procédés de recyclage simples et économiques, visant à limiter l'emploi de méthodes hydrométallurgiques onéreuses et productrices de déchets complexes.

Parmi ces différents ensembles hétérogènes, les piles à combustible à oxydes solides (SOFC) et les électrolyseurs de haute température (SOEC) constituent un exemple particulièrement notable, et dont le marché est en forte croissance au vu de leur application dans les technologies de l'hydrogène. Parmi les technologies de l'hydrogène, il est possible de différencier les piles à combustible qui utilisent l'hydrogène afin de produire de l'électricité des électrolyseurs qui utilisent de l'électricité pour produire de l'hydrogène. Plusieurs types de piles à combustibles sont disponibles sur le marché. Parmi elles, les SOEC -pour « solide oxide fuel cell » en anglais - ont l'avantage d'être réversibles c'est-à-dire de fonctionner également en mode « électrolyseur ».

Les SOFC et SOEC comportent généralement un empilement de couches fonctionnelles comprenant, entre autres, un électrolyte solide, une électrode à hydrogène et une électrode à oxygène, le tout souvent renforcé par des interconnecteurs Leur composition doit être adaptée au fonctionnement à haute température. Ainsi, les électrolytes sont, le plus souvent, composés d'oxydes de zirconium yittriés pouvant contenir des dopants tels que l'Al. Pour l'électrode à hydrogène le cermet nickel / zircone, stabilisé à l'oxyde d'yttrium (Ni-YSZ) est le plus utilisé. L'électrode à oxygène est généralement composée de structure perovskites tels que des manganites de lanthane dopé au strontium, de type La₁₋ₓSrₓMnO_{3-y}, noté LSM.

En fin de vie, un enjeu essentiel consiste à récupérer le métal et l'oxyde de valeur afin de réduire le volume des flux soumis à d'éventuels traitements chimiques, et de favoriser le réemploi direct de certaines fractions.

Actuellement, il existe peu de procédés visant à recycler les SOEC/SOFC. Ceux existants reposent généralement sur le caractère insoluble de l'oxyde de zirconium pour réaliser une séparation sélective de Ni, Co et des terres rares du zirconium. Ces procédés sont simples mais ils emploient des réactifs en forte concentration ce qui a pour effet de représenter un coût environnemental et économique important, et également de limiter la réutilisation en boucle directe du YSZ qui, dans les conditions employées, perd l'yttrium et n'est donc pas réutilisable pour cette application.

Les procédés hydro métallurgiques ont toutefois un impact environnemental fort et il est souhaitable de les optimiser pour protéger l'environnement et améliorer la rentabilité du procédé.

Par exemple, la demande de brevet CN114262806 A propose un procédé pour recycler le zirconium et le scandium des piles à combustible à oxyde solide. Ce procédé comporte plusieurs étapes : broyage, digestion, évaporation et cristallisation, puis extraction, précipitation et calcination. Ce procédé décrit donc des étapes d'un procédé hydrométallurgique avec des étapes préalables permettant de diminuer les déchets de gaz et organiques du procédé. La demande de brevet CN113322488 A présente un procédé de recyclage du nickel présent dans les piles à combustible à oxyde solide. Le procédé comprend les étapes suivantes : après désassemblage et broyage ainsi que des étapes permettant d'enlever les parties organiques, la poudre est immergée dans un solvant eutectique profond permettant de dissoudre le nickel. Après filtration, la solution est utilisée dans un montage électrochimique permettant de déposer le nickel sous forme métallique. Ce procédé, permettrait de diminuer l'utilisation d'acides et de bases fortes.

Enfin, la demande de brevet CN117599939 A propose un procédé comprenant des étapes de séparation physique appliquées au recyclage de piles à combustible à oxyde solide. La première étape consiste en un broyage de déchets de pile à combustible contenant du nickel, du chrome, du zirconium et du scandium. La poudre obtenue est mélangée à de l'eau. Une séparation magnétique est appliquée à la suspension permettant de séparer le chrome et le nickel du zirconium et scandium. La séparation repose sur des propriétés magnétiques des particules, ce qui permet d'améliorer l'empreinte écologique du procédé, toutefois, les séparations magnétiques ont des limites significatives quant à la séparation de particules à faible taille (1 µm pour les séparations en voie humide et 50 µm pour les séparations en voie sèche).

### Résumé de l'invention

La présente invention concerne un procédé de pré-traitement de matériaux composites comportant au moins une phase métallique et optionnellement une phase oxyde. Le procédé a comme objectif de séparer et concentrer les phases à recycler dudit matériau par des étapes de traitement physiques en amont de son recyclage. En particulier, le procédé a comme objectif de réduire l'impact environnemental et améliorer la rentabilité d'un procédé de recyclage des phases métalliques et oxydes d'un matériau composite par hydrométallurgie.

À ces fins, l'invention propose un procédé de prétraitement d'un matériau composite en vue de son recyclage, ledit matériau comportant des phases constitutives intégrant une phase métallique à recycler dans un état métallique, ledit procédé comportant les actions suivantes :
- le broyage du matériau, dit « broyage de libération », jusqu'à obtenir une poudre avec une taille de particule p1prédéfinie pour libérer au moins partiellement la phase métallique à recycler du matériau composite ;
- l'agglomération mécanique par broyage en présence d'un agent dispersant, au cours de laquelle une taille de particule d'au moins une phase métallique à recycler est augmentée par agglomération ;
- la séparation gravitaire de la poudre agglomérée dans un agent dispersant ; et
- l'obtention d'une phase métallique concentrée par séparation d'un sédiment issu de ladite séparation gravitaire.

Le procédé de l'invention est particulièrement avantageux en ce qu'il permet de concentrer efficacement les phases métalliques d'un matériau composite au moyen d'étapes purement mécaniques, simples à mettre en œuvre, n'utilisant comme seul réactif qu'un agent dispersant, lui-même potentiellement réutilisable. Il en résulte une consommation réduite en ressources chimiques, un impact environnemental limité, et une préparation favorable pour des étapes de recyclage ultérieures, notamment hydrométallurgiques.

En particulier, le matériau composite peut être choisi parmi des cellules à oxydes solides « SOFC », des électrolyseurs haute température « SOEC » après un prétraitement réducteur ou stoppé en mode « SOFC », ou tout autre déchet métallique comprenant une phase métallique à recycler mélangée à au moins une phase oxyde ou céramique. Par exemple, peuvent être concernés ; des matériaux composites comportant du Ni, Co, Mo et/ou du Fe, par exemple des batteries métal oxyde comportant une partie métallique et des oxydes aux cathodes et anodes, des catalyseurs industriels à base de Ni, Co et Mo dans une matrice céramique, ainsi que des cermets comportant une phase métallique de Co dans une matrice céramique, voir des déchets composites issues d'autres procédés de fonderie.

L'invention propose de libérer, dans une première étape, la phase métallique à recycler, puis d'agglomérer sélectivement cette dernière, de manière à créer un différentiel de masse avec les autres phases constitutives du matériau, telles que les oxydes ou les céramiques, permettant ainsi une séparation gravitaire efficace.

Bien entendu, ce phénomène d'agglomération n'est possible que si la phase métallique à recycler est dans un état métallique c'est-à-dire sous forme réduite, car seule la forme métallique présente une ductilité suffisante pour s'agglomérer sous l'effet des forces mécaniques exercées lors du broyage. Si le métal est oxydé, celui-ci se comporte de manière cassante et se fragmente au lieu de former des agglomérats cohérents, ce qui rend inefficace la séparation par différence de taille ou de densité.

Dans le cas des cellules SOFC et SOEC, la phase métallique - en particulier le nickel - se trouve généralement déjà dans un état métallique lorsque la cellule a fonctionné en mode SOFC, du fait des conditions électrochimiques et atmosphériques (atmosphère réductrice du côté anode). Ainsi, grâce à son utilisation réversible, il suffit d'utiliser lors du dernier cycle la pile en mode « SOFC » garantissant la réduction du Ni. Alternativement, lorsque ce n'est pas le cas ou pour des matériaux concernés outres que les cellules SOFC, une étape de réduction préalable du matériau composite peut être effectuée afin de ramener la phase métallique à recycler à l'état métallique. Cette réduction peut être réalisée par un traitement thermique sous atmosphère réductrice, typiquement en présence d'un gaz contenant de l'hydrogène (H₂) ou un mélange de gaz inertes et réducteurs, à une température adaptée à la réduction du métal concerné sans altérer la structure des phases oxydes que l'on souhaite conserver.

Il est à noter, que le broyage est un broyage à billes ; celles-ci sont constituées d'un matériau dense et chimiquement inerte (vis-à-vis du solide et du dispersant utilisé) tel que l'oxyde de zirconium, l'alumine, l'acier inoxydable ou le nitrure de silicium. Les billes du broyage de libération présentent alors un diamètre adapté à la taille initiale des fragments (idéalement, au moins d'un diamètre 3 fois supérieure au plus gros fragment) et permettant d'attendre la taille de particule p1. Le broyage d'agglomération utilise des tailles de billes dont le diamètre est inférieur ou égal à celui utilisé lors du broyage de libération.

Toutefois, il est à noter que le broyage génère autant le phénomène de réduction de taille de particules du matériau permettant de libérer la phase métallique, ainsi que le phénomène d'agglomération de la phase métallique. Ces étapes se déroulent donc au moins partiellement de manière parallèle, et peuvent éventuellement être réalisées dans une seule étape en fonction de la taille de particules des fragments des matériaux à traiter. De préférence, ces étapes sont réalisées dans des étapes dédiées.

Le broyage à libération peut comporter l'une, ou toute combinaison des caractéristiques ci-après techniquement opérantes :
- Le broyage de libération est réalisé dans un broyeur à billes avec des billes de diamètre compris entre 0,3 mm et 20 mm, à une vitesse de rotation comprise entre 300 et 800 tours par minute, pendant une durée comprise entre 30 minutes et 6 heures, de manière à obtenir une taille de particule moyenne de l'ordre du micromètre, correspondant à la maille de libération de la phase métallique à recycler.
- le broyage de libération est effectué avec un rapport massique billes/poudres compris entre 1 :1 et 10 :1;
- le broyage de de libération est un broyage à billes réalisé en une seule étape permettant d'atteindre la taille de particule p1.
- le broyage de libération est un broyage en deux étapes : une première étape de broyage grossier suivi d'une deuxième étape de broyage fin permettant d'atteindre la taille de particule p1. Effectuer ce broyage en deux étapes permet d'adapter les tailles et la quantité des billes à la réduction de la taille des fragments et ainsi maximiser la libération en un laps de temps le plus court. Par exemple, le broyage grossier est réalisé avec des billes de diamètre compris entre 5 mm et 20 mm, et un rapport massique billes/poudre compris entre 1:1 et 4:1 et le broyage fin est réalisé avec des billes de diamètre compris entre 0,3 mm et 3 mm, et un rapport billes/poudre compris entre 3:1 et 6:1 de manière à atteindre une taille de particule p₁ correspondant à la maille de libération de la phase métallique.
- La poudre issue du broyage de libération est passée par un tamis de moins de 50 µm, et le broyage de libération est de préférence répété avec une poudre de matériau composite retenue par le tamis. En particulier, cette étape est utile pour contrôler la taille de particule du broyage grossier, et éventuellement la taille finale de la poudre avant le broyage d'agglomération ;
- La taille de particule p1 correspond à une taille de grain unitaire ± 20%, de préférence ± 10% ou ± 5% de la phase métallique à recycler intégrée dans ledit matériau composite. Par exemple, la taille de grain unitaire est mesurée par MEB (microscopie électronique à balayage) ;
- Optionnellement, le broyage de libération utilise un agent dispersant ;
- La taille de particule p1 est inférieure à 3 µm tel que mesurée par diffraction laser, de préférence inférieure à 2 µm, et d'environ 1 µm lorsque le matériau composite est choisi parmi des cellules à oxydes solides (SOFC), et d'électrolyseurs haute température (SOEC), et comporte une phase métallique de nickel et/ou de cobalt mélangé à une phase oxyde comportant du Yttrium YSZ

L'invention se caractérise également pour l'utilisation d'un agent dispersant permettant l'agglomération et la séparation gravitaire. Dans un mode de réalisation, l'agent dispersant de l'agglomération mécanique et/ou de la séparation gravitaire est choisi parmi l'eau, les alcools tels que l'éthanol, le butanol, le 1,4 butanediol, des tensioactifs anioniques tels que le lignosulfate de sodium, et des dispersants minéraux tels que le silicate de sodium, ainsi que de mélanges de ceux-ci. L'agent dispersant optionnel pour le broyage de libération est choisi dans la même liste.

De préférence, l'agent dispersant pour la séparation gravitaire n'est pas l'eau, et le procédé utilise de préférence le même agent dispersant pour toutes les étapes.

Pour des particules libérées de taille p1 d'ordre micrométrique, l'étape d'agglomération est réalisée avec des billes sphériques constituées du même type de matériau, d'un diamètre compris entre 0,3 mm et 3 mm, avec un rapport massique billes/poudre compris entre 5:1 et 15:1, de manière à favoriser l'agglomération de la phase métallique sans nouvelle fragmentation de la phase métallique.

La séparation gravitaire peut être réalisée par décantation, centrifugation, ou à l'aide d'un appareil adapté, notamment à l'aide d'un hydrocyclone, ou des concentrateurs gravimétriques de type Falcon.

Dans un mode de réalisation préféré, la séparation gravitaire inclut une ou plusieurs séparations gravitaires séquentielles du sédiment. Il est ainsi possible d'augmenter considérablement la pureté de la phase métallique concentrée.

De même, il est possible de recommencer le procédé avec le sédiment de la séparation gravitaire à partir de l'agglomération mécanique pour augmenter la pureté de la phase métallique concentrée, c'est-à-dire que l'agglomération mécanique et la séparation gravitaire sont répétées au moins une fois avec le sédiment issu de la séparation gravitaire.

Dans un mode de réalisation préféré, le matériau composite comporte au moins une phase métallique à l'état réduit mélangée à au moins une phase oxyde, tel qu'un oxyde d'Yttrium, et une phase oxyde concentrée est obtenue dans un surnageant de ladite séparation gravitaire. Dans le cas d'une phase oxyde de zircone stabilisée à l'oxyde d'yttrium YSZ, le procédé permet de préserver efficacement l'yttrium, et le YSZ peut être valorisé directement après séchage dudit surnageant, ou suite à des étapes de purifications supplémentaires.

Dans un mode de réalisation, la séparation gravitaire mets en œuvre une force magnétique, tel qu'un aimant, en bas de la séparation gravitaire pour augmenter la vitesse de sédimentation de la phase métallique, ou en haut de la séparation gravitaire pour récupérer des polluants métalliques flottants.

Enfin, l'invention concerne également un procédé de recyclage d'un matériau composite, ledit procédé étant caractérisé en ce qu'il met en œuvre une étape de purification d'un sédiment ou du surnageant obtenu avec le procédé de prétraitement d'un matériau composite selon l'invention.

D'autres caractéristiques et avantages de l''invention seront apparents à la lecture de la description qui suit des exemples non limitatifs de réalisation de l'invention en référence aux dessins annexés.

### LISTE DE FIGURES

La [Fig. 1] illustre schématiquement un procédé de pré-traitement de matériaux composites selon l'invention.
La [Fig. 2] montre la composition initiale des fragments démantelés d'une cellule SOFC, et de la phase métallique et oxydes concentrées selon l'exemple 1 du procédé de l'invention.
La [Fig. 3] montre la composition initiale d'une cellule SOFC, et de la phase métallique et oxydes concentrées selon l'exemple 2 du procédé de l'invention.

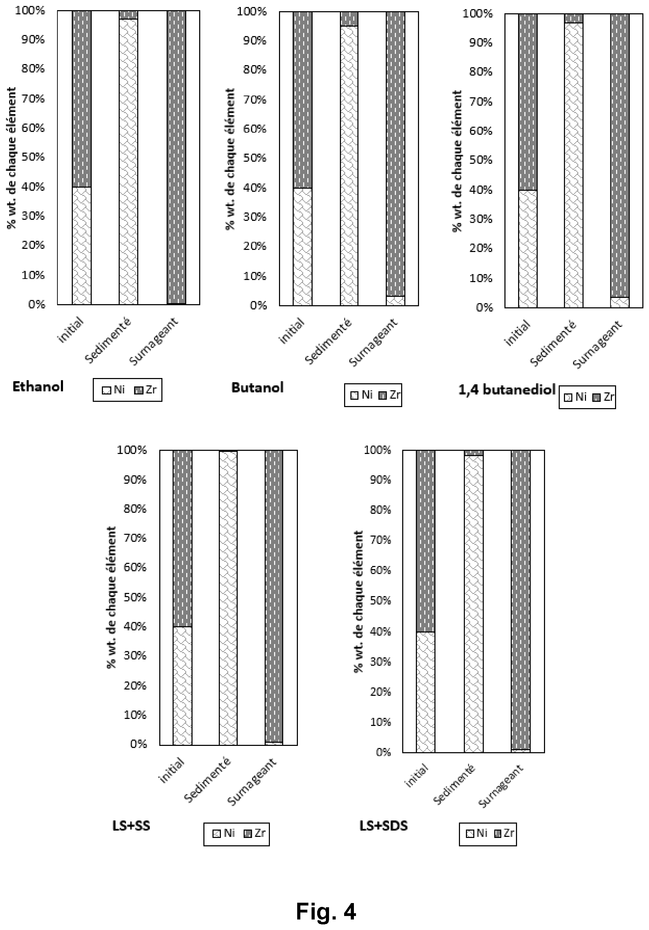

La [Fig. 4 montre les effets de l'agent dispersant utilisé dans la séparation gravitaire sur la pureté des fractions générées.

### DESCRIPTION DETAILLEE

La présente invention concerne un procédé de prétraitement de matériaux composites comportant au moins une phase métallique à recycler, et, dans certains cas, une ou plusieurs phases oxydes ou céramiques. Le procédé vise à séparer et concentrer ces phases constitutives par des étapes exclusivement physiques, en amont d'un traitement de recyclage ultérieur, notamment par voie hydrométallurgique.

L'objectif principal du procédé est de réduire l'impact environnemental et d'améliorer la rentabilité du recyclage des matériaux composites métalliques, en particulier en diminuant la consommation de réactifs chimiques et le volume de matière à traiter chimiquement. Le procédé permet également de préserver certaines phases, comme les oxydes, dans un état chimique et structural compatible avec une valorisation directe ou partielle.

Le matériau composite ciblé est typiquement un déchet industriel ou technologique comportant une phase métallique à recycler en état métallique, en mélange avec une ou plusieurs phases oxydes ou céramiques. À titre d'exemple privilégié, l'invention s'applique au recyclage des cellules à oxydes solides (SOFC) et des électrolyseurs haute température (SOEC), qui intègrent des électrodes à base de nickel métallique, du cobalt métallique et des électrolytes de type YSZ (oxyde de zirconium stabilisé à l'yttrium). La phase métallique à recycler de ces cellules contient majoritairement du nickel et une faible proportion de cobalt.

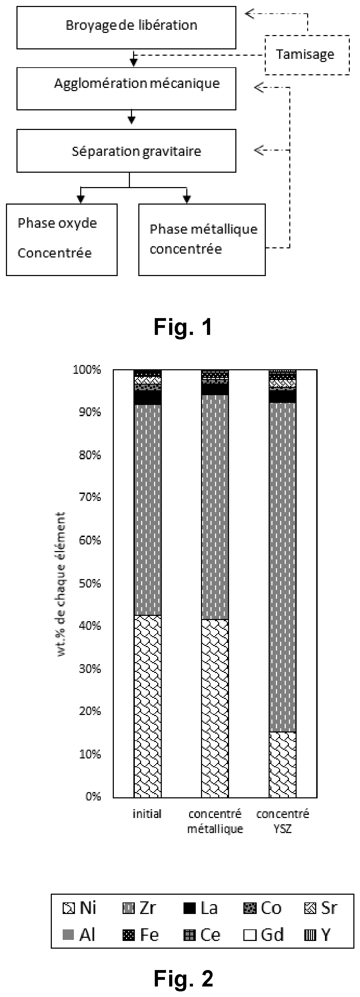

Tel qu'illustré à la figure 1, le procédé de l'invention comprend les étapes suivantes :
- Une étape de broyage, dite « broyage de libération », destinée à fragmenter le matériau composite jusqu'à une taille de particule prédéfinie p₁, notamment de l'ordre du micromètre, permettant de libérer au moins partiellement la phase métallique du reste de la matrice ;
- Une étape d'agglomération mécanique, réalisée par broyage en présence d'un agent dispersant liquide, dans laquelle les particules métalliques libérées s'agglomèrent sélectivement, formant des particules de taille plus élevée que les particules d'oxydes ou de céramiques ;
- Une étape de séparation gravitaire, dans laquelle la poudre agglomérée est mise en suspension dans un agent dispersant, identique ou compatible avec celui utilisé précédemment, et soumise à une décantation ou équivalent, permettant la séparation des phases par différence de taille et de densité ;
- Une récupération d'une phase métallique concentrée dans le sédiment, et d'une phase oxydée ou céramique concentrée dans le surnageant.

Le procédé présente plusieurs avantages majeurs. Il repose exclusivement sur des étapes mécaniques simples et robustes, telles que le broyage à billes et la séparation gravitaire, pouvant être mises en œuvre à l'échelle laboratoire ou industrielle, avec des équipements standards (broyeurs planétaires, décanteurs). D'autres outils plus spécialisés, tels que des centrifugeuses, séparateurs gravimétriques ou concentrateurs centrifuges, peuvent également être utilisés sans sortir du cadre de l'invention.

L'unique réactif employé est l'agent dispersant, utilisé à la fois pour faciliter l'agglomération mécanique des particules métalliques et pour améliorer la stabilité de la suspension pendant la séparation gravitaire. Cet agent est en forme liquide ou en solution, compatible avec un broyage en milieu humide, ce qui permet de limiter la formation et la dispersion de poussières fines ou toxiques. De plus, l'agent dispersant utilisé n'est ni corrosif ni toxique, et peut être recirculé sans perte significative, ce qui réduit la consommation de consommables.

En limitant la modification de la structure des phases oxydes et en concentrant efficacement la phase métallique, le procédé permet de réduire considérablement le volume de matière à traiter en voie chimique, tout en élevant la pureté des fractions séparées. Il en résulte une baisse des besoins en réactifs chimiques, une réduction des effluents, et donc un impact environnemental considérablement diminué pour le recyclage ultérieur.

### Séparation et concentration de Ni, et YSZ à partir des cellules SOFC

Les exemples 1 et 2 ci-après illustrent des exemples spécifiques, non limitatifs, de mise en œuvre du procédé de prétraitement selon l'invention, appliqué à des cellules SOFC issues de packs ayant fonctionné en mode pile, et présentant ainsi une phase métallique à recycler (notamment le nickel) à l'état métallique. Dans les deux cas, les cellules sont préalablement démantelées manuellement, les grilles de support sont retirées, et les fragments récupérés présentent une taille de l'ordre du centimètre.

L'ensemble du procédé comprend les étapes suivantes :
- Un broyage de libération, réalisé dans un broyeur planétaire *Retsch* PM100, avec un bol en oxyde de zirconium de 50 mL, des billes d'oxyde de zirconium, et des pauses régulières pour éviter la surchauffe. Cette étape inclut :
   i) Un broyage grossier de 20 g de fragments à 400 rpm pendant 30 minutes, en présence de 30 g d'agent dispersant, avec 10 billes de 10 mm de diamètre ;
   ii) Un tamisage à 25 µm pour éliminer les fragments surdimensionnés, suivi d'un re-broyage grossier de la fraction retenue ;
   iii) Un broyage fin du passant à 400 rpm pendant 3 h, en présence de 30 g d'agent dispersant et 90 g de billes de 0,5 mm, afin d'atteindre la maille de libération d'environ 1 µm. Ce broyage fin induit également un début d'agglomération de la phase métallique (nickel), du fait de sa ductilité et de sa nature réduite.
- Une première étape de décantation, réalisée pendant 1 heure dans un agent dispersant, permettant aux fines particules d'oxyde de type YSZ déjà libérées de rester en suspension, tandis que les agglomérats de particules métalliques (Ni, Co) et les fragments non totalement libérés sédimentent.
- Une étape d'agglomération mécanique, appliquée sur le sédiment précédemment récupéré, par broyage à billes durant 3 h (avec pauses régulières), en présence de 90 g de billes de 0,5 mm de diamètre, 10 g de poudre et 5 g d'agent dispersant. Cette étape vise à compléter la libération de la phase métallique encore encapsulée, et à renforcer l'agglomération des particules de Ni afin d'augmenter le différentiel de taille avec les particules d'oxyde YSZ.
- Une seconde étape de décantation, réalisée pendant 30 minutes dans un agent dispersant, suivie d'une récupération du sédiment, lequel est redécanté une deuxième fois pendant 30 minutes dans le même milieu.
- Une étape de récupération finale : le sédiment final constitue la phase métallique concentrée, tandis que les particules issues des surnageants successifs sont additionnées pour former la phase oxydée concentrée. Les deux fractions sont filtrées sous vide sur un filtre de 0,45 µm afin de récupérer l'agent dispersant et d'accélérer le séchage.

Les exemples 1 et 2 ont été réalisés dans des conditions identiques, à l'exception de la nature de l'agent dispersant. L'exemple 1 utilise de l'éthanol pur, tandis que l'exemple 2 utilise un mélange à 20 % en masse d'éthanol et 80 % d'eau déionisée.

Il est à noter que dans ces exemples, les étapes de broyage de libération et d'agglomération mécanique emploient toutes deux un agent dispersant liquide, et que des phénomènes d'agglomération de la phase métallique et de libération progressive peuvent être observés dans les deux étapes. Le broyage grossier permet de passer de fragments centimétriques à des particules submillimétriques ; le broyage fin permet d'atteindre la maille de libération (taille p₁) d'environ 1 µm, correspondant à la taille typique des grains métalliques dans les cellules SOFC et SOEC.

### Example 1

Dans cet exemple, l'ensemble des étapes (broyage, agglomération, décantation) est réalisé en utilisant de l'éthanol 96° comme dispersant. Cette configuration permet une bonne dispersion des fines particules d'oxydes, favorise l'agglomération du nickel métallique, et conduit à une séparation nette entre les deux fractions lors de la décantation.

Après filtration et séchage, les analyses chimiques (Fig. 2) (ICP-OES après minéralisation) indiquent :
- Une fraction concentrée métallique contenant plus de 99 % du Ni initial avec une pureté de 91 %, et 87 % de récupération du Co montrant une concentration de 2% ;
- Une fraction oxydée (YSZ) contenant 92 % du YSZ initial avec une pureté de 96 %. Cette dernière contient aussi entre 65-75% des terres rares initialement présentes (La, Gd, Ce).

### Example 2

Dans cet exemple, l'ensemble du procédé est reproduit à l'identique, à l'exception du milieu dispersant, constitué d'un mélange éthanol 96°/eau déionisée à 20/80 en masse. Ce dispersant présente une capacité de dispersion réduite, ce qui nuit à la séparation des particules fines d'YSZ, qui ont tendance à s'adsorber sur les agglomérats de nickel.

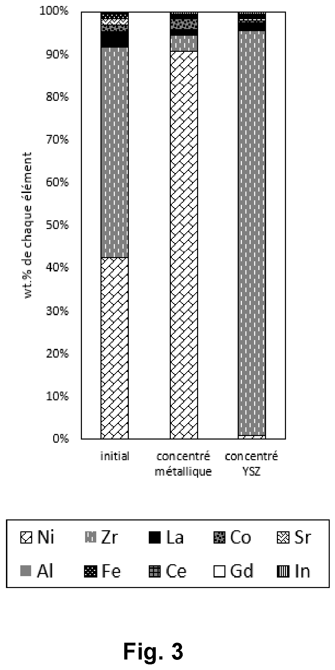

Après les mêmes étapes de broyage, décantation et filtration, les résultats sont inférieurs par rapport à l'exemple 1 (Fig. 3). Le concentré métallique contient 42 % de Ni et 1 % de Co représentant des récupérations de 98 % et 98 % respectivement. Le concentré de YSZ contient 86 % de YSZ représentant une récupération de ce matériau de 29 %.

Par conséquent, l'eau n'est pas préférée en tant qu'agent dispersant lors des étapes de séparation gravitaire. D'autre part, l'eau est un bon agent dispersant favorisant l'agglomération et la libération des particules et pourrait donc être utilisé préalablement. Pour des effets pratiques, pour éviter des étapes de séchage intermédiaires, et dans un but de recyclage de l'agent dispersant, il est préférable d'avoir le même agent dispersant dans toutes les étapes. Toutefois, d'un point de vue écologique, l'eau est le meilleur choix.

Enfin, les inventeurs ont également mis en évidence que l'utilisation d'un agent dispersant n'est pas nécessaire lors de l'étape de broyage de libération, et que ce broyage peut être effectué dans un seul broyage permettant d'attendre la maille de libération en augmentant la vitesse, par exemple à 600 rpm dans les conditions des exemples 1 et 2. Ce broyage plus efficace, permet de passer directement du broyage de libération, au broyage d'agglomération, puis à la séparation gravitaire.

De même, il a été observé qu'un faible ratio d'agent dispersant : poudre est favorable à l'agglomération. L'agglomération mécanique est donc de préférence réalisée avec un volume d'agent dispersant compris entre 0,3 et 1 fois la masse de poudre mise en œuvre, exprimée en grammes, de manière à favoriser les collisions et contacts entre particules métalliques pour permettre leur agglomération efficace. Pour la séparation gravitaire par décantation, un volume d'agent dispersant compris entre 10 et 30 fois la masse en grammes de poudre traitée peut être envisagée. Bien entendu, les paramètres opératoires du procédé sont à optimiser en fonction du matériau à traiter et de l'équipement utilisé.

### Example 3

### Essais d'agglomération avec différents dispersants

Dans cet exemple, l'objectif est d'évaluer l'influence de différents agents dispersants utilisés spécifiquement au cours de l'étape d'agglomération mécanique et de la séparation gravitaire. Contrairement aux exemples 1 et 2, la matière utilisée ici est un mélange modèle de poudres commerciales formé à partir de poudre d'oxyde de zirconium (ZrO₂), de taille moyenne de 5 µm (réf. Sigma-Aldrich CAS 1314-23-4), représentant 60 % en masse du mélange, et de poudre de nickel métallique (d₅₀ ≈ 11 µm, plage 1-100 µm, CAS 7440-02-0 - Sigma-Aldrich, 99 % pureté), représentant les 40 % restants. Le nickel et l'oxyde de zirconium étant déjà sous forme libre, il n'y a pas besoin d'une étape de broyage de libération.

Ce mélange est soumis à une étape d'agglomération mécanique identique à celle décrite aux exemples 1 et 2. Après broyage, la suspension est transférée dans un décanteur contenant 200 mL du même dispersant pour une première décantation de 30 minutes. Le sédiment et le surnageant sont ensuite séparés, et une seconde décantation est réalisée sur le sédiment remis en suspension, dans les mêmes conditions. Toutes les fractions solides sont ensuite récupérées par filtration, séchées, puis analysées par ICP-OES après minéralisation, et caractérisées en granulométrie par diffraction laser.

Les dispersants testés comprennent l'éthanol pur (96°), le butanol, le 1,4-butanediol, l'eau, le lignosulfate de sodium (LS), le dodecyl sulfate de sodium (SDS), le silicate de sodium (SS), ainsi que des mélanges de ces agents. Les résultats (Fig. 3) montrent que l'ensemble des dispersants, à l'exception de l'eau, permettent une séparation efficace entre la phase métallique et la phase oxydée, avec des différences de pureté entre fractions restant faibles. L'eau seule conduit à une dispersion insuffisante des fines particules d'oxyde, entraînant une pollution plus importante de la fraction métallique. Cet exemple met en évidence la flexibilité du procédé vis-à-vis du choix du dispersant pour l'étape d'agglomération, et confirme que plusieurs familles de dispersants conviennent pour cette application, sous réserve de maintenir une bonne sélectivité entre les phases au cours de la séparation gravitaire.

### Example 4

### Séparation magnétique

Une amélioration de la pureté de la phase YSZ a été effectué par séparation magnétique des fines particules de Ni° en suspension ont été réalisés à l'aide d'un aimant suspendu dans la suspension lors de la décantation. Cette étape s'est révélée très efficace pour augmenter la pureté de 0,55 % la pureté de la phase YSZ. Alternativement, cette séparation magnétique est mise en œuvre en plaçant le décanteur sur un plateau magnétique, de sorte à augmenter la vitesse de décantation de la phase métallique.

## Revendications

1. Procédé de prétraitement d'un matériau composite en vue de son recyclage, ledit matériau comportant des phases constitutives intégrant au moins une phase métallique à recycler dans un état métallique, ledit procédé comportant les actions suivantes :
- le broyage du matériau, dit « broyage de libération », jusqu'à obtenir une poudre avec une taille de particule p1 prédéfinie pour libérer au moins partiellement la phase métallique à recycler du matériau composite ;
- l'agglomération mécanique par broyage de ladite poudre en présence d'un agent dispersant, et dans laquelle une taille de particule de la phase métallique à recycler est augmentée par agglomération ;
- la séparation gravitaire de la poudre agglomérée dans un agent dispersant ; et
- l'obtention d'une phase métallique concentrée par séparation d'un sédiment issu de ladite séparation gravitaire.

2. Procédé selon la revendication 1, dans lequel le matériau composite est choisi parmi des cellules à oxydes solides « SOFC », des électrolyseurs haute température « SOEC », ou tout autre déchet métallique comprenant une phase métallique à recycler mélangée à au moins une phase oxyde ou céramique

3. Procédé selon l'une des revendications précédentes, dans lequel le broyage de libération et le broyage d'agglomération est un broyage à billes constituées d'un matériau dense et chimiquement inerte tel que l'oxyde de zirconium, l'acier inoxydable, l'alumine ou le nitrure de silicium, et/ou les billes du broyage de l'agglomération mécanique présentent un diamètre égal ou inférieur à un diamètre des billes utilisées pour le broyage de libération.

4. Procédé selon l'une des revendications précédentes, dans lequel :
- le broyage de libération est réalisé avec des billes de diamètre compris entre 0,3 mm et 20 mm, un rapport massique billes/poudre compris entre 1:1 et 10 :1, et/ou
- l'étape d'agglomération est réalisée avec des billes sphériques d'un diamètre compris entre 0,3 mm et 3 mm, avec un rapport massique billes/poudre compris entre 5:1 et 15:1.

5. Procédé selon l'une des revendications précédentes dans lequel la taille de particule p1 correspond à une taille de grain unitaire ± 20%, de préférence ± 10 ou ± 5% de la phase métallique à recycler intégrée dans ledit matériau composite.

6. Procédé selon l'une des revendications précédentes, dans lequel le matériau composite est choisi parmi des cellules à oxydes solides « SOFC », et d'électrolyseurs haute température « SOEC », et comporte une phase métallique de nickel et/ou de cobalt mélangé à une phase oxyde comportant du Yttrium YSZ, et la taille de particule p1 est < 3 µm, de préférence < 2 µm, tel que d'environ 1 µm.

7. Procédé selon l'une des revendications précédentes, dans lequel l'agent dispersant de l'agglomération mécanique et/ou de la séparation gravitaire est choisi parmi l'eau, les alcools tels que l'éthanol, le butanol, le 1,4 butanediol, des tensioactifs anioniques tels que le lignosulfate de sodium, et des dispersants minéraux tels que le silicate de sodium, ainsi que de mélanges de ceux-ci.

8. Procédé selon la revendication 7, dans lequel l'agent dispersant pour la séparation gravitaire n'est pas l'eau, et le procédé utilise de préférence un seul agent dispersant.

9. Procédé selon l'une des revendications précédentes, dans lequel la séparation gravitaire est effectuée par décantation, centrifugation, à l'aide d'un hydrocyclone ou des concentrateurs gravimétriques de type Falcon.

10. Procédé selon l'une des revendications précédentes, dans lequel la séparation gravitaire inclut une ou plusieurs séparations gravitaires séquentielles du sédiment, et/ou dans lequel l'agglomération mécanique et la séparation gravitaire sont répétées au moins une fois avec le sédiment issu de la séparation gravitaire.

11. Procédé selon l'une des revendications précédentes, dans lequel la séparation gravitaire mets en œuvre une force magnétique en bas de la séparation gravitaire pour augmenter la vitesse de sédimentation de la phase métallique, ou en haut de la séparation gravitaire pour récupérer des polluants métalliques flottants.

12. Procédé selon l'une des revendications précédentes, dans laquelle le matériau composite comporte la phase métallique à recycler mélangée à au moins une phase oxyde, tel qu'un oxyde d'Yttrium, et une phase oxyde concentrée est obtenue dans un surnageant de ladite séparation gravitaire.

13. Procédé de recyclage d'un matériau composite, ledit procédé étant **caractérisé en ce qu'**il met en œuvre une étape de purification d'un sédiment obtenu selon l'une des revendications 1 à 11, ou du surnageant obtenu selon la revendication 12.
